# EUROPÄISCHE PATENTSCHRIFT

(11) **EP 3 368 492 B1**
(45) Veröffentlichungstag und Bekanntmachung des Hinweises auf die Patenterteilung: **21.08.2019**
(21) Anmeldenummer: 16788054.1
(22) Anmeldetag: 21.10.2016
(51) Int. Cl.: C04B 7/12, C04B 14/10, C04B 20/04

(54) **VERFAHREN ZUR HERSTELLUNG EINES ZEMENTKLINKERSUBSTITUTS, DAS VORRANGIG AUS KALZINIERTEM TON BESTEHT**
METHOD FOR PRODUCING A CEMENT CLINKER SUBSTITUTE WHICH IS MADE PRIMARILY OF CALCINED CLAY
PROCÉDÉ DE PRODUCTION D'UN SUBSTITUT AU CLINKER COMPOSÉ EN PREMIER LIEU D'ARGILE CALCINÉE

(30) Priorität: 28.10.2015 DE 102015118391
(43) Veröffentlichungstag der Anmeldung: 05.09.2018
(73) Patentinhaber: thyssenkrupp Industrial Solutions AG, 45143 Essen (DE); thyssenkrupp AG, 45143 Essen (DE)
(72) Erfinder: ENDERS, Michael, 48143 Münster (DE); ROHLOFF, Kathrin, 20457 Hamburg (DE)
(74) Vertreter: thyssenkrupp Intellectual Property GmbH
(86) Internationale Anmeldenummer: PCT/EP2016/075413
(87) Internationale Veröffentlichungsnummer: WO 2017/072047

(56) Entgegenhaltungen:
- WO-A1-2012/126696
- WO-A1-2015/082075
- Edgardo Irassar ET AL: "Rheologyofportlandcementpasteswithcalcine dclaysadditions", , 31. Januar 2014 (2014-01-31), XP055323068, Gefunden im Internet: URL:https://www.researchgate.net/profile/R afael_Talero/publication/286709828_Rheolog y_of_portland_cement_pastes_with_calcined_ clays_additions/links/576d6fb708ae0b3a3b75 5221.pdf [gefunden am 2016-11-25]

## Beschreibung

Portlandzemente sind pulverförmige Produkte aus der Hauptkomponente Klinker (95 - 100 %) und Sulfatverbindungen als Erstarrungsregler (EN 197; CEM I). Zemente werden durch gemeinsame oder getrennte Mahlung in einem Zerkleinerungsaggregat (Kugelmühle, Vertikalrollenmühle, Hochdruckwalzenpresse) aus grobkörnigen, granularen oder staubförmigen Rohstoffen erzeugt. Zemente können neben Klinker und Gips auch weitere in Normen geregelte Zumahlstoffe enthalten(e.g. EN 197: CEM II, CEM III, CEM IV, CEM V). Solche Zemente werden als Kompositzemente bezeichnet. Sie sind durch einen geringeren Klinkeranteil gekennzeichnet. Im Falle einer Kalksteinzugabe zu Zementen spricht man von Füller

Die globale Zementproduktion betrug in 2013 ca. 4 Mrd. t. Der Klinkeranteil in Zementen auf Basis des Portlandzementklinkers ist von etwa 90% in 1990 auf heute im Mittel 76 % gesunken. Ein reduzierter Klinkeranteil hat mehrere Vorteile:
- der Investitionsbedarf in neue Klinkerlinien kann reduziert werden,
- mit dem freigesetzten Klinker kann zusätzlicher Zement erzeugt werden,
- die klinkerbezogenen CO₂₋Emissionen sinken und
- in den meisten Fällen werden die spezifischen Kosten des Endprodukts Zement geringer.

Portlandzemente und neuartige Bindemittel auf Basis von Geopolymer und Sulfoaluminatklinker werden zusammenfassend als Bindemittel bezeichnet. Für Portlandzement und Kompositzement auf Basis des Portlandzementklinkers ebenso wie für neuartige Bindemittel auf Basis von Geopolymer oder Calciumsulfoaluminatklinker ist die Substitution von Klinker eine wichtige Stellschraube zur Reduktion von CO₂-Emissionen des Endprodukts Bindemittel (WBCSD Cement Industry Roadmap 2009).

Zur Klinkersubstitution eignen sich Füller mit keiner oder nur geringer Reaktivität, puzzolane Stoffe (natürlich, synthetisch) und latent hydraulische Zumahlstoffe. Puzzolane umfassen natürliche, meist vulkanische Gesteine (Bims, Trass) und synthetische Reststoffe aus der Kohleverstromung, wie zum Beispiel Flugaschen. Hüttensand als Beiprodukt der Stahlherstellung ist ein latent hydraulischer Zusatzstoff. Puzzolane und latent hydraulische Stoffe erfordern eine alkalische Anregung, beispielsweise durch Klinker oder Calciumhydroxid und Wasser. Im Falle der Geopolymere erfolgt die Anregung durch Laugen.

Heute besteht global gesehen ein jährlicher Bedarf an Zumahlstoffen in der Größenordnung von mehr als 1 Mrd t. Der erwartete, weiter steigende Bedarf an Bindemitteln wird auch die Nachfrage nach Klinkerersatzstoffen weiter erhöhen. Zumahlstoffe wirken sich in vielen Fällen, neben der Substitution von Klinker, positiv auf weitere Anwendungseigenschaften der Kompositzemente, wie z.B. die Verarbeitbarkeit, das Mikrogefüge oder die Endfestigkeit, aus.

Verfügbare Klinkersubstitute sind mit Ausnahme von Kalkstein knapp und regional ungleich verteilt. Der Einsatz von Kalkstein ist aufgrund der annähernd unbeschränkten Verfügbarkeit hochwertigen Kalksteins besonders interessant. Insbesondere bei niedrigen Substitutionsraten wirkt Kalksteinfüller als Zumahlstoff im Kompositzement zudem positiv auf die Festigkeitsentwicklung. Jedoch nimmt die Leistungsfähigkeit der Kalksteinzemente hinsichtlich der Festigkeitsentwicklung und Dauerhaftigkeit bei Kalksteinzugaben jenseits der 5 - 10 Gew.-% ab. Hochkalksteinhaltige Zemente (CEM II B L/LL) sind zudem nur für wenige Anwendungen im Betonbau zugelassen (DIN 1045-2).

Die Nutzung natürlicher Puzzolane als Zumahlstoff erfordert geeignete geologische Vorkommen. Neben der regional unterschiedlichen Verfügbarkeit von Puzzolan schränken zunehmend Aspekte des Umwelt- und Landschaftsschutzes geeignete Abbauorte ein. Natürliche Puzzolane sind zudem häufig durch eine erhöhte Porosität charakterisiert, die bei der Zementherstellung eine erhöhte Trocknungsleistung erfordern und auch nach der Zumahlung in Zement einen erhöhten Wasserbedarf des Bindemittels bewirken und dadurch die Endfestigkeiten des Baustoffs verringern.

Flugaschen sind verfügbar, wenn Kohle als Energieträger zur Elektrizitätserzeugung genutzt wird und entstehen aus der mineralischen Substanz der Kohle bei der Verstromung. Bei der Kohleverstromung in einer Kohlenstaubflamme bei hohen Temperaturen bildet sich durch vollständiges Aufschmelzen der mineralischen Substanz Flugasche mit charakteristischen kugelförmigen Partikeln. Diese Partikel reduzieren als Zumahlstoff in Bindemitteln und Baustoffen den Wasseranspruch. Kohleaschen aus Wirbelschichtanlagen hingegen wirken wasseranspruchserhöhend. Sie werden daher nicht oder nur in geringerem Mengen als Zumahlstoff zu Bindemittel zugegeben werden.

Die heute verfügbaren Volumen an Hüttensand (etwa 270 Mio t/Jahr) sind global auf nur 10 wichtige Regionen beschränkt (Global Cement Magazine, Jan 2015). Die Hüttensandverfügbarkeit ist zudem an die Konjunktur der Stahlindustrie gebunden. Als Bestandteil von Bindemitteln nimmt Hüttensand nur einen geringen Einfluss auf den Wasseranspruch.

Die Qualität von Zementen unterliegt nationalen Regelungen. Festgelegt sind zum Beispiel die Zusammensetzung der Zemente, das Erstarrungsverhalten, die Festigkeitsentwicklung oder die Volumenbeständigkeit (EN 197, ASTM C150). Begleitend werden die Testverfahren für normierte Eigenschaften spezifiziert (EN 196, ASTM C114, ASTM C109, ASTM C1437).

Zemente werden weitgehend zusammen mit Wasser und Gesteinszuschlagstoffen zur Herstellung von Beton eingesetzt. Die Betonqualität kann aber nicht zwanglos aus der Zementqualität (beispielsweise Festigkeiten, Erstarrungszeiten) abgeleitet werden, da außer dem Zementgehalt, die Gesteinskörnung, der Wasserbedarf und Betonzusatzmittel die Eigenschaften des Baustoffs Beton bestimmen. Die Qualität von Beton wird nach den Anwendungseigenschaften bewertet (DIN 1045, EN 206).

Ferner wird die Qualität eines Betons nach Frischbetoneigenschaften (EN 12350) und Festbetoneigenschaften (EN 12390) in Normen festgelegt und bewertet. Frischbeton bezeichnet das plastische Gemisch aus Zuschlag, Zement und Wasser vor dem Erstarren. Als Konsistenz des Frischbetons wird dabei das Fließverhalten zu einem bestimmten Zeitpunkt ab der Wasserzugabe oder über einen Zeitraum nach Wasserzugabe bezeichnet. Verschiedene Messverfahren zur Bestimmung der Konsistenz sind in EN 12350 zusammengefasst. Die Konsistenz eines Frischbetons ist innerhalb der Messverfahren in Konsistenzklassen ein-geteilt (EN 206-1, DIN 1045-2).

In der Baupraxis wird an Stelle des Begriffs Konsistenz häufig der relative Term Verarbeitbarkeit verwandt. Die Verarbeitbarkeit ist für das flüssige Einbringen von Beton in komplexe Formen und Ausschalungen, in Strukturen aus Stahlarmierung und die Länge des Zeitraums für den Transport vor dem Einbringen des Betons bedeutsam. Die Verarbeitbarkeit darf nicht durch eine erhöhte Wasserzugabe verbessert werden, da ein mehr an Wasser einen Verlust an Festigkeit bewirkt. Aus diesem Grunde werden im Beton zunehmend Betonzusatzmittel (EN934-2) verwandt, die eine verbesserte Verarbeitbarkeit des Frischbetons oder einen veränderten Verarbeitungszeitraum ohne eine festigkeitsschädigende erhöhte Wasserzugabe erzielen.

Festbetoneigenschaften für spezifizierte Anwendungsfälle (Expositionsklassen) sind in EN 206-1 und DIN 1045-2 festgelegt. Spezifiziert sind zum Beispiel Kriterien zur Dauerhaftigkeit, Endfestigkeit, zu minimalen Zementgehalten, maximalen Wasserzugabe oder auch bestimmte Zementzusammensetzung oder die Kornverteilung der Gesteinskörnung. Die Festbetoneigenschaften entwickelt der Beton nach dem Einbringen in das Bauteil.

Die Zusammensetzung neuer Zemente insbesondere neuer Kompositzemente wird also durch die Zementnormen bei der Herstellung des Bindemittels und die Betonnormen sowie die Verwendungsmöglichkeit des Betons in der jeweiligen Anwendung bestimmt. Das Ziel bei der Herstellung der Kompositzemente ist eine dem Portlandzement aus nur Klinker und Sulfatträger entsprechende Leistungsfähigkeit hinsichtlich der Festigkeitsentwicklung und der Verarbeitungseigenschaften einzustellen. Zementnormen erlauben hierzu komplexe Zementzusammensetzungen (e.g. EN 197) und öffnen vielfältige Möglichkeiten durch ein Mischen von Zumahlstoffen Kosten und Zementeigenschaften zu optimieren.

Der ökologische (Emissionen) und ökonomische (Kostenreduzierung) Druck den Klinkeranteil weiter zu reduzieren, hat zu einer steigenden Nachfrage nach Klinkerersatzstoffen geführt. In vielen Fällen ist die Nachfrage größer als die auf den Märkten verfügbare Menge an Klinkerersatzstoff.

Eine Möglichkeit an Klinkerersatzstoffe zu gelangen, ist die Herstellung eigener Klinkerersatzstoffe aus kalzinierten Tongesteinen in Kalzinationsaggregaten im Zementwerk. Kalzinierte Tone weisen puzzolane Eigenschaften auf und sind beispielsweise in Kombination mit Branntkalk Hauptbestandteil historischer Mörtel (www.pnas.org/cgi/doi/10.1073/pnas.1417456111). Die kalzinierten Tone werden üblicherweise mit dem Zusatz "Meta" versehen (wie Meta-kaolin, Meta-illit), um den Verlust der Kristallstruktur und veränderte Gefüge in den Gesteinen durch den Kalzinationsprozess auch im Produktnamen anzudeuten.

Ein Nachteil der kalzinierten Tone sind die vergleichsweise niedrigen Kalzinationstemperaturen von 600 - 1200°C, die nur ein unvollständiges Aufschmelzen der Tone ermöglichen. Die Partikelgefüge der kalzinierten Tone ähneln somit den Reststoffen einer mit Kohle betriebenen Wirbelschichtanlage (Trümer et al, ZKG 2014; Vigil de la Villa et al: Applied Clay Science 2007). Die Partikel der kalzinierten Tone zeigen eine besondere durch den thermischen Prozess (ohne wesentliche Schmelzbildung) verursachte poröse Struktur, die insbesondere dann einen erhöhten Wasseranspruch der kalzinierten Tone in Bindemitteln bewirken, wenn kalzinierte Tone in der Größenordnung > 10 Gew.-% den Bindemitteln zugesetzt werden. In der Praxis kann der Nachteil eines erhöhten Wasseranspruchs und der daraus resultierenden schlechteren Verarbeitbarkeit nur durch eine erhöhte Wasserzugabe zum Frischbeton verbunden mit einem Festigkeitsverlust des Baustoffs Beton oder durch Zugabe eines Fließmittels mit dem Nachteil höherer spezifischer Kosten des Baustoffs Beton kompensiert werden.

Der Erfindung liegt die Aufgabe zugrunde, ein Verfahren zur Herstellung eines Zementklinkersubstituts anzugeben, das vorrangig aus kalziniertem Ton besteht, wobei das Zementklinkersubstitut eine gute Verarbeitbarkeit und einen reduzierten Wasseranspruch aufweist.

Erfindungsgemäß wurde diese Aufgabe durch die Merkmale des Anspruchs 1 gelöst, indem wenigstens zwei unterschiedliche Tonrohstoffe bereitgestellt werden, aus denen eine Tonmischung hergestellt wird, die anschließend zu dem Zementklinkersubstitut kalziniert wird. Beim erfindungsgemäßen Verfahren wird die Wirkung unterschiedlicher Tonminerale auf den Wasseranspruch bzw. auf die Verarbeitbarkeit eines kalzinierten Tons ausgenutzt und durch Mischung wenigstens zweier unterschiedlicher Tonrohstoffe gezielt eingestellt.

Vorteilhafte Ausgestaltungen der Erfindung sind Gegenstand der weiteren Ansprüche. So wird für das Zementklinkersubstitut insbesondere ein erster Sollwert für seinen Wasseranspruch oder ein zweiter Sollwert für seine Verarbeitbarkeit vorgegeben, die durch das Mischungsverhältnis der wenigstens zwei unterschiedlichen Tonrohstoffe in der Tonmischung eingestellt werden kann.

Unter dem Begriff "Wasseranspruch" wird umgangssprachlich der Wassergehalt einer Zementpaste bei Normsteife verstanden, der insbesondere nach der EN 196-3 bestimmt wird. Hierzu wird einer Zementmischung wiederholt Wasser zugegeben, um eine Paste herzustellen. An der Paste wird die Eindringtiefe eines Tauchstabs nach einem definierten Zeitraum bestimmt. Als Normsteife bzw. als Wasseranspruch wird die Wasserzugabe bezeichnet, die einer Eindringtiefe des Tauchstabes von 6 +/-2 mm einspricht. Die Normsteife der Zementpaste korreliert in Grenzen mit der Verarbeitbarkeit von Betonen.

Betone werden in Konsistenzklassen nach EN 206 geliefert. Diese Konsistenzklassen werden umgangssprachlich als "Verarbeitbarkeit" bezeichnet. Für bestimmte Anwendungen, beispielsweise zum Ausfüllen einer bestimmten Form, ist eine ausreichend geringe Viskosität des Betons erforderlich. Für bestimmte Anwendungen sind allerdings von Seiten der Norm Expositionsklassen festgelegt, die auch die maximalen Wassergehalte in einem Beton vorschreiben. Um die Verarbeitbarkeit eines Betons für eine bestimmte Wasserzugabe zu bestimmen, werden Verfahren aus EN 12350 (2009) genutzt. Betone werden nach den dort spezifizierten Verfahren nach dem Ausbreitmass (Slump), dem Vebetest oder dem Verfahren nach Walz in Verarbeitungsklassen unterschiedlicher Viskosität eingestellt. Nach der ASTM C150 wird die Verarbeitbarkeit eines Mörtels bestimmt. In diesem Verfahren wird die Wassermenge bestimmt, um mit einem Mörtel auf einem Ausbreittisch ein gewünschtes Ausbreitmass (110% bezogen auf den Ausgangsdurchmesser von 100mm) zu erzielen. Dieses Verfahren ist näher an der tatsächlichen Anwendung angelehnt.

Mit steigender Wasserzugabe wird die Verarbeitbarkeit verbessert, es reduziert sich allerdings die in einem Beton erzielbare Festigkeit. Deshalb ist es umso besser, je weniger Wasser für eine gewünschte Verarbeitbarkeit benötigt wird.

Zur Einstellung des Mischungsverhältnisses der wenigstens zwei unterschiedlichen Tonrohstoffe kann vorgesehen werden, dass der Wasseranspruch und/oder die Verarbeitbarkeit des Zementklinkersubstituts gemessen werden. Die Bestimmung der Normsteife (EN 196) bzw. des Wasseranspruchs nach ASTM C 1437 dauert nur wenige Minuten. Es ist zweckmäßig, die Messungen wenigstens alle zwei Stunden, vorzugsweise wenigstens stündlich und höchstvorzugsweise wenigstens halbstündlich durchzuführen.

Da die Art des Zementklinkersubstituts maßgeblich für die benötigte Wasserzugabe nach ASTM C 1437 ist, wäre es möglich, eine solche Messung auch an dem Zementklinkersubstitut selbst durchzufuhren. Für den größeren Bezug zur Anwendung des Zementklinkersubstituts in Zementen, ist jedoch die Messung in einem Zement oder Mörtel mit dem Zementklinkersubstitut vorzuziehen.

Gemäß einer weiteren Ausgestaltung der Erfindung werden der gewünschte Wasseranspruch und/oder die gewünschte Verarbeitbarkeit des Zementklinkersubstituts neben der Einstellung des Mischungsverhältnisses der wenigstens zwei unterschiedlichen Tonrohstoffe auch durch den für die Kalzination der Tonmischung zur Anwendung kommenden Brennstoff angepasst. Bezüglich des Brennstoff können insbesondere seine Zusammensetzung durch Mischung mehrere, verschiedener Brennstoffe und/oder seiner Kornverteilung durch Zerkleinerung variiert werden. Die Erfindung macht sich hierbei die Erkenntnis zunutze, dass die Brennstoffzusammensetzung und/oder die Kornverteilung des zur Anwendung kommenden Brennstoffes Einfluss auf den Wasseranspruch bzw. die Verarbeitbarkeit nehmen. Die Kornverteilung einer Flugasche wird durch den Aschegehalt der Kohle und den Aufmahlgrad der Kohle bestimmt. Es gilt, je weniger Asche und je feiner die Kohle aufgemahlen wird, desto feinkörniger die resultierende Flugasche. Die für die Kalzination der Tonmischung in Betracht kommenden Brennstoffe unterscheiden sich in dem Aschegehalt und der Zusammensetzung der Minerale in der Kohle. Prinzipiell kann man zwischen kaolinitreichen und illitreichen Brennstoffen unterscheiden.

Die Einstellung des Mischungsverhältnisses der wenigstens zwei unterschiedlichen Tonrohstoffe und/oder die Anpassung der Brennstoffzusammensetzung und/oder die Kornverteilung des bei der Kalzination zur Anwendung kommenden Brennstoffes erfolgt zweckmäßigerweise in Abhängigkeit einer Messung des Wasseranspruchs und/oder der Verarbeitbarkeit des Zementklinkersubstituts bzw. eines Mörtels oder Zements mit diesem Zementklinkersubstitut. Der Wasseranspruch und die Verarbeitbarkeit des Zementklinkersubstituts werden beispielsweise mit Hilfe einer rheologischen Analyse bestimmt. Des Weiteren kann die Tonmischung auch schon vor der Kalzination hinsichtlich ihre mineralogischen Zusammensetzung analysiert werden, wobei die Messergebnisse zur Einstellung des Mischungsverhältnisses verwendet werden können. Vorzugsweise wird die Tonmischung vor der Kalzination zerkleinert und/oder homogenisiert.

Weitere Vorteile und Ausgestaltungen der Erfindung werden im Folgenden näher erläutert.

In der Zeichnung zeigen
- Fig. 1:: Blockschaltbild des Verfahrens zur Herstellung der erfindungsgemäßen Tonmischung mit Einstellung der Dosierung der Tonkomponenten in Abhängigkeit wenigstens einer Messung,
- Fig. 2:: Darstellung des Wasseranspruchs und der Festigkeitsentwicklung von vier Laborzementen mit unterschiedlichen Tonmischungen,
- Fig. 3:: Blockschaltbild des Verfahrens zur Herstellung der erfindungsgemäßen Tonmischung mit einer Brennstoffregelung,
- Fig. 4:: Darstellung der Druckfestigkeit und des Wasseranspruchs in Abhängigkeit der Körnung der Flugasche,
- Fig. 5:: Darstellung der Druckfestigkeit und des Wasseranspruchs bei verschiedenen Zementen aus kalziniertem Ton und Flugasche und
- Fig. 6:: Blockschaltbild des Verfahrens zur Herstellung der erfindungsgemäßen Tonmischung mit Einstellung der Dosierung der Tonkomponenten in Abhängigkeit wenigstens einer Messung und mit einer Brennstoffregelung.

Ziel der vorliegenden Erfindung ist, den Wasseranspruch des Zumahlstoffs "Zementklinkersubstitut" derart zu modifizieren, dass eine ausreichende Verarbeitbarkeit bei einem möglichst geringen Mehrbedarf an Wasserzugabe relativ zu einem Vergleichszement ohne Zementklinkersubstitute erreicht wird. Hierdurch soll eine verbesserte Festigkeitsentwicklung erzielt und bedingt durch die Klinkersubstitution der spezifische CO₂-Gehalt erniedrigt und durch geringeren Fließmitteleinsatz eine bessere Kostensituation bewirkt werden.

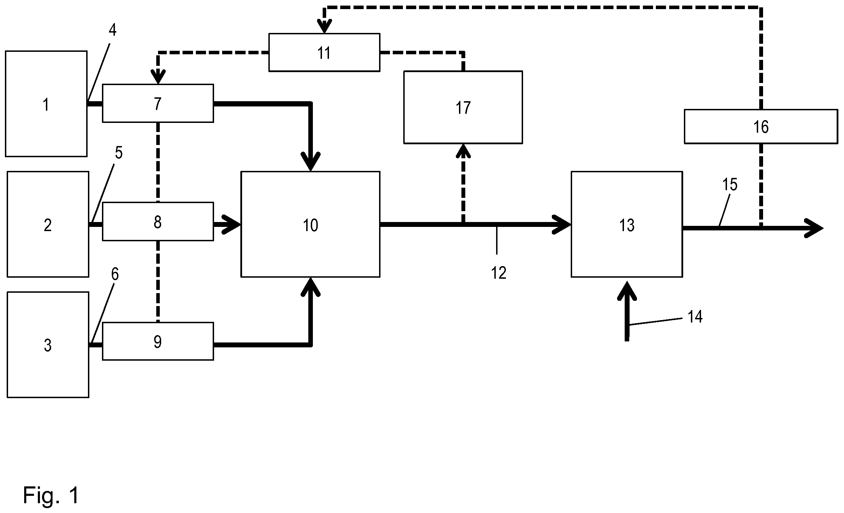

Das Grundprinzip des erfindungsgemäßen Verfahrens zur Herstellung eines Zementklinkersubstituts, das vorrangig (also zum großteil) aus kalziniertem Ton besteht, wird zunächst anhand des Blockschaltbildes der Fig. 1 näher erläutert. Die dargestellte Anlage zur Herstellung eines Zementklinkersubstituts aus kalziniertem Ton besteht hier aus drei Lagern 1, 2, 3, die unterschiedliche Tonrohstoffe 4, 5, 6 bereitstellen. Jedes Lager steht über eine zugeordnete Dosiereinrichtung 7, 8, 9 mit einem Zerkleinerungs- oder Mischaggregat 10 in Verbindung. Die Dosiereinrichtungen können beispielsweise durch Bandwaagen oder Kastenbeschicker gebildet werden. Über eine Steuereinrichtung 11 werden die Dosiereinrichtungen 7, 8, 9 entsprechend dem gewünschtem Mischungsverhältnis der verschiedenen Tonrohstoffe eingestellt. Die im Zerkleinerungs- oder Mischaggregat 10 (beispielsweise ein Pflugscharmischer) entstehende Tonmischung 12 wird direkt oder optional über einen Zwischenbunker, einem Kalzinationsaggregat 13 (z.B. Flugstromreaktor, Wirbelschichtreaktor oder Drehrohrofen) zugeführt, in dem die Tonmischung mit Hilfe von Brennstoff 14 in einem Temperatur Bereich von 600 bis 1.200 °C, vorzugsweise von 600 - 950°C, und besonders bevorzugt von 750 - 900°C zu einem Zementklinkersubstitut 15 kalziniert wird.

In einer ersten Analyseeinrichtung 16 wird der Wasseranspruch und/oder die Verarbeitbarkeit des Zementklinkersubstituts 15 bzw. einer Mischung des Zementklinkersubstituts mit Zement oder Mörtel ermittelt und mit den gewünschten Sollwerten für den Wasseranspruch bzw. die Verarbeitbarkeit verglichen, um anschließend über die Steuereinrichtung 11 und die Dosiereinrichtungen 7, 8, 9 das Mischungsverhältnis anzupassen. Die Bestimmung des Wasseranspruches bzw. der Verarbeitbarkeit in der ersten Analyseeinrichtung 16 erfolgt wahlweise am Zementklinkersubstitut 15 oder einem Bindemittel oder Baustoff mit dem Zementklinkersubstitut 15 als Inhaltstoff.

Optional kann ferner von der Tonmischung 12 nach dem Zerkleinerungs- oder Mischaggregat 10 und vor den Kalzinationsaggregat 13 eine Probe genommen werden, die in einer ersten Probennahme- und Analyseeinrichtung 17 untersucht wird, die manuell, halbautomatisch oder vollautomatisch betrieben werden kann. Hierfür kommen vorzugsweise Röntgendiffraktometer in Betracht, die qualitativ und bei entsprechende Ausrüstung auch quantitativ mit der Rietveldanalyse oder einer Bestimmung von Intensitäten einzelner Röntgenbeugungsreflexe eine quantitative Charakterisierung der mineralogischen Zusammensetzung der Tonmischung zulassen. Alternativ sind aber auch andere Analyseeinrichtungen, wie beispielsweise ein Infrarotspektrometer, Röntgenfluoreszenzspektrometer oder thermogravimetrische Verfahren denkbar. Mit Hilfe der ersten Probennahme- und Analyseeinrichtung 17 kann somit die Zusammensetzung der Tonmischung ermittelt werden, die dann ebenfalls über die Steuereinrichtung 11 mit in den Regelkreis zur Dosierung der einzelnen Tonrohstoffe eingebunden werden kann. So kann das Ergebnis der mineralogischen Analyse der Tonmischung über einen Sollwertregler verarbeitet und zur kontinuierlichen Regelung des Wasseranspruches bzw. der Verarbeitbarkeit des Zementklinkersubstituts genützt werden.

Das Zementklinkersubstitut 15 kann über ein nachgelagertes, nicht da gestelltes Mahlaggregat gemeinsam oder separat vermahlen oder auch direkt einem Zement zugemischt werden.

Die Bestimmung des Wasseranspruches bzw. der Verarbeitbarkeit des Zementklinkersubstituts 15 in der ersten Analyseeinrichtung 16 kann an dem Zementklinkersubstitut Ton 15 selbst oder aber in einer geeigneten ab Mischung des Zementklinkersubstituts mit Zement oder aber einem Mörtel aus Zement und Sand (beispielsweise einer genormten Mörtelmischung nach EN 196-1) oder in einem Versuch mit eine Betonmischung nach EN 096 erfolgen. Geeignete Verfahren zur Bestimmung des Wasseranspruches bzw. der Verarbeitbarkeit ergeben sich zum Beispiel aus dem Zementnormen (beispielsweise EN 196, ASTM C190, ASTM C1437). Es sind aber auch zur Bestimmung der Verarbeitbarkeit andere rheologische Messverfahren sowohl in manueller, halbautomatischer oder vollautomatischer Form denkbar.

Die Tonrohstoffe 4, 5, 6 werden vorzugsweise in einer Korngröße von 0.2 - 15mm, insbesondere von 0.4 - 5 mm, in den Lagern 1, 2, 3 bereitgestellt. In vielen Fällen wird es erforderlich sein, den Tonrohstoff vor der Befüllung des zugehörigen Lages zu trocknen und zu zerkleinern. Als Zerkleinerungsaggregate hat sich eine Schlägermühle als besonders geeignet für die Aufbereitung und Homogenisierung der Tongesteine erwiesen. Es ist jedoch auch denkbar für die Zerkleinerung und Trocknung andere Mahlaggregate, wie eine Vertikalrollenmühle, eine Kugelmühle oder eine Hochdruckwalzenpresse zu verwenden.

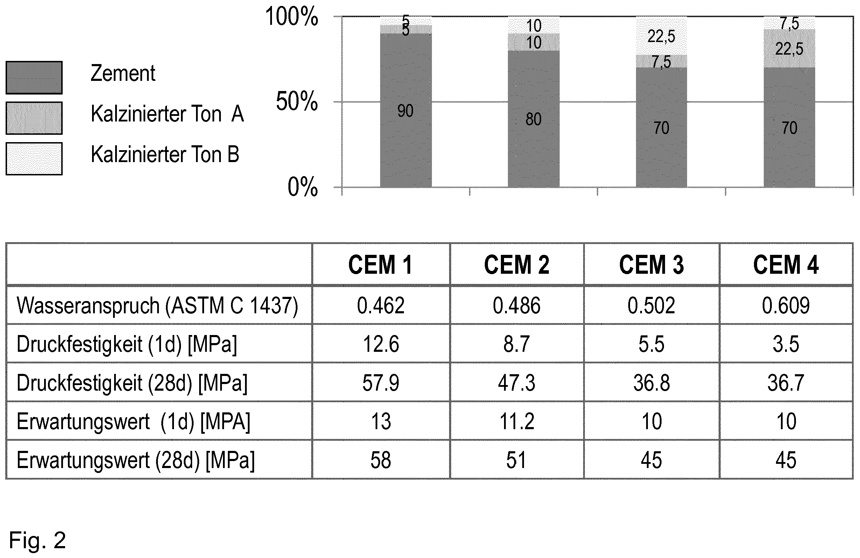

Fig. 2 zeigt den Einfluss unterschiedlicher Tonmischungen auf den Wasseranspruch eines Bindemittels. Gemäß Fig.2 wurden vier verschiedene Mörtel (CEM 1 bis CEM 4) hinsichtlich des Wasserbedarfs und der Druckfestigkeit untersucht. Die Mörtel setzen sich dabei jeweils aus Zement und einem Zementklinkersubstitut aus zwei unterschiedlichen Tonrohstoffen zusammen. Für die vier Mörtel wurde der Wasserbedarf nach ASTM C1437 für eine Sollverarbeitbarkeit (100% flow) bestimmt. Aus der Tabelle lässt sich ablesen, dass der Wasserbedarf der Mörtel mit steigendem Gehalt an kalzinierten Ton A steigt. Der kalzinierte Ton B hat hingegen nur einen geringen Einfluss auf den Wasseranspruch.

Alle Mörtel wurden bei gleicher Verarbeitbarkeit auch hinsichtlich der entwickelten Druckfestigkeit untersucht. Es zeigt sich, dass insbesondere die 1- Tagesfestigkeit im Falle des kalzinierten Ton A negativ mit dem Wasseranspruch des Mörtels korreliert. In der 28-Tagesfestigkeit bilden sich darüber hinaus weitere Reaktivitätsunterschiede der kalzinierten Tonmischung ab.

Sowohl die 1-Tagesfestigkeiten, als auch die 28-Tagesfestigkeit erreichen jedoch den aus dem reduzierten Klinkergehalt errechneten Festigkeitswert (Erwartungswert: Festigkeitsentwicklung normiert auf den Zementgehalt) nicht. Damit kann der negative Einfluss des Wasseranspruchs auf die Festigkeitsentwicklung und der Einfluss des kalzinierten Tons auf den Wasseranspruch belegt werden. Ein Vergleich der beiden Mörtel CEM 3 und CEM 4 zeigt aber, dass der Wasseranspruch und die Druckfestigkeit sehr stark vom Mischungsverhältnis der beiden Tonrohstoffe abhängen. So wirkt sich hier der kalzinierte Ton A deutlich schlechter als der kalzinierte Ton B auf Wasseranspruch und Druckfestigkeit aus.

Einen weiteren, sehr signifikanten Einfluss auf den Wasseranspruch und/oder die Verarbeitbarkeit des kalzinierten Tons bzw. eines Bindemittels mit dem kalzinierten Ton hat der für die Kalzination im Kalzinationsaggregat 13 verwendete Brennstoff.

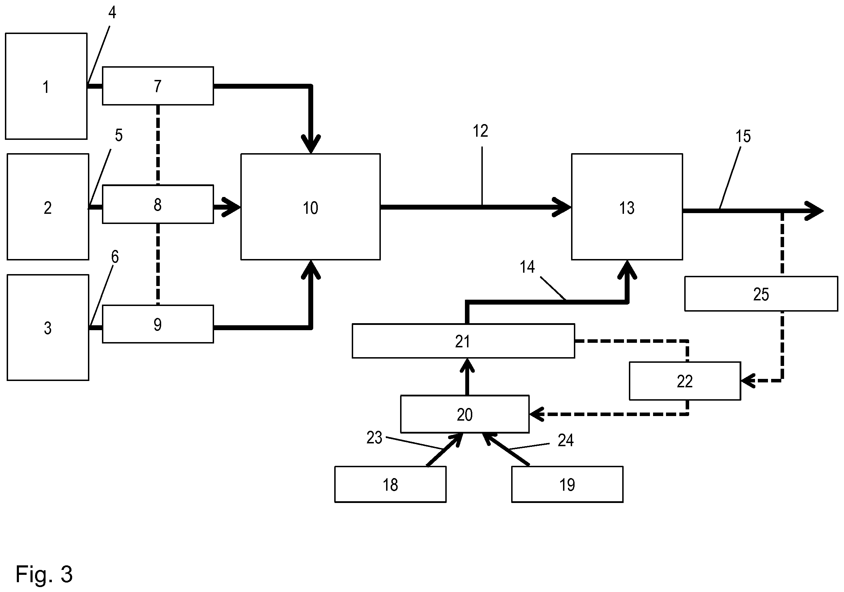

Das Blockschaltbild gemäß Fig.3 zeigt ein Verfahren zur Herstellung eines Zementklinkersubstituts aus kalzinierten Ton mit zusätzlicher Regelung des Brennstoffes. Die Aufgabe des Brennstoffs 14 auf das Kalzinationsaggregat 13 erfolgt aus einem oder mehreren Brennstofflagern 18, 19 direkt oder über ein Zerkleinerungsaggregat 20. Hinter dem Zerkleinerungsaggregat 20 und vor dem Kalzinationsaggregat 13 kann eine zweite Probennahme- und Analyseeinrichtung 21 (z.B. ein Lasergranulometer) installiert werden, die insbesondere auch eine Partikelgrößenmessung ermöglicht. Mittels eines entsprechenden Regelkreises kann die Kornverteilung des Brennstoffs 14 auf einen gewünschten Sollwert eingestellt werden, um die Partikelgröße der sich im Kalzinationsprozess ergebenen Brennstoffasche einzustellen. Diese Einstellung kann je nach Ausführung der zweiten Probennahme- und Analyseeinrichtung 21 in Verbindung mit dem Zerkleinerungsaggregat 20 über eine zweite Steuer- und Regeleinrichtung 22 erfolgen.

Der unbrennbare Rückstand eines Brennstoffs wird gemeinhin als Asche bezeichnet. Er entsteht aus der mineralischen Substanz des Brennstoffs, vorzugsweise einer Kohle. Der Begriff mineralische Substanz wird im Sinne von Bryers (in: Mineral Matter and Ash in Coal, ACS symposium series 301; 1986) verwandt. Die mineralische Substanz bleibt nach dem Ausbrennen der organischen Substanz des Brennstoffs zurück und wird gemeinsam mit dem kalzinierten Ton als Zementklinkersubstitut ausgetragen und somit mit dem kalzinierten Ton zu einem puzzolanen Produktstrom bestehend aus kalziniertem Ton und Flugasche (15) vereinigt und aus dem Kalzinationsaggregat ausgetragen. Maßgeblich ist hier, dass beide Teilkomponenten des Produktstroms (welches das Zementklinkersubstitut bildet) nämlich kalzinierter Ton und die Brennstoffasche über eigene puzzolane Eigenschaften verfügen.

Aus der Kohleverbrennung sind zum Beispiel Bett- und Flugaschen als Rückstand der Kohle bekannt. Sie werden aufgrund ihrer puzzolanen Eigenschaften auch als Zumahlstoffe in Zement eingesetzt. Es ist daher denkbar, dass auch diese Materialien, wenn der Aschegehalt des Brennstoffs alleine zur Einstellung des Wasseranspruch des Kalzinationsprodukts nicht ausreicht, gesondert als inerte Substanz dem Tonkalzinationsprozess zugesetzt werden.

Die Kornverteilung einer Brennstoffasche wird über den Aufmahlgrad des Brennstoffs bestimmt. Die mineralische Substanz ist dispers in der organischen Substanz des Brennstoffs eingeschlossen. Bei der Verbrennung, insbesondere in einer Kohlenstaubflamme, wird bei einem gegebenen Anteil an mineralischer Substanz das Verhältnis der organischen zu anorganischen Stoffe kleiner und die Korngröße der Brennstoffteilchen sinkt mit dem Ausbrand. Zuletzt bleibt allein die anorganische Substanz übrig. Die Kornverteilung der resultierenden Asche ist feinkörniger, wenn die Aufgabekorngröße des Brennstoffs feinkörniger wird und wenn der Anteil mineralische Substanz/Teilchen kleiner wird. In Flugstromreaktoren wie einer Kohlenstaubverbrennung ist die Partikelladung/Volumeneinheit gering. Eine Kornvergröberung im Kalzinationsaggregat, also ein Verschmelzen der einzelnen Partikel aus unterschiedlichen Teilchen des aufgegebenen Brennstoffs, kann aufgrund der geringen Partikeldichte/Volumeneinheit vernachlässigt werden.

Werden die Brennstoffe 23 und/oder 24, beispielsweise Kohlen, für die Verbrennung durch Mahlung auf etwa 100µm Partikelgröße in dem Zerkleinerungsaggregat 20 (beispielsweise eine Kohlenmühle) vorbereitet, werden in den Kornverteilungskurven der neu gebildeten Flugaschen ebenfalls nur Körner bis etwa 100 µm gefunden. Das Maximalkorn einer Asche wird also bereits durch die Zerkleinerung/Mahlung angelegt. Die Kornverteilung einer Flugasche und damit die Wirkung auf den Wasseranspruch (z.B. nach ASTM C109, ASTM C1437) in Zement kann somit durch das Zerkleinerungsaggregat 20 eingestellt werden. Es ist daher zweckmäßig, wenn der Wasseranspruch bzw. die Verarbeitbarkeit des Zementklinkersubstituts 15 bzw. eines Bindemittels mit dem kalzinierten Ton 15 in einer weiteren Analyseeinrichtung 25 ermittelt und über die zweite Steuer- und Regeleinrichtung 22 zur Einstellung des Mischungsverhältnisses der Brennstoffe und/oder zur Einstellung der im Zerkleinerungsaggregat 20 erzielbaren Korngröße des Brennstoffs 14 verwendet wird.

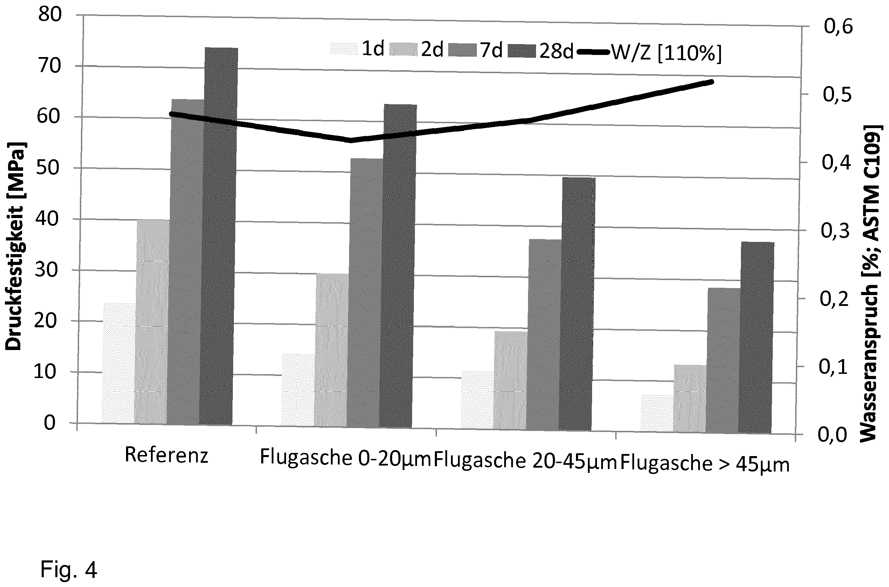

Der Effekt der Korngröße einer Brennstoffasche auf den Wasseranspruch (nach ASTM C1437, Mörtel nach EN 196) wird anhand der Fig. 4 verdeutlicht. Drei Flugaschezemente hergestellt mit unterschiedlichen Flugaschekörnungen mit jeweils 30% Klinkersubstitution werden mit einem reinen CEM I Referenzzement (Referenz) nur aus Klinker und Sulfatträger verglichen. Es zeigt sich, dass sehr feinkörnige Flugasche (0 - 20 µm) den Wasseranspruch (W/Z) des Mischzements im Vergleich zur Referenz reduziert. Mittelfeine Flugasche (20 - 45 µm) führt zu einem Wasseranspruch in der Größenordnung des CEM I Referenzzements. Grobkörnige Flugasche (> 45 µm) erhöht den Wasseranspruch verglichen zur Referenz. Bei gleicher Substitutionsrate weist der Flugaschezement mit dem geringsten Wasseranspruch die höchsten Festigkeiten der drei getesteten Flugaschezemente auf.

Mit den vorgestellten Daten ist dokumentiert, dass Brennstoffasche einer bestimmten Feinheit den Wasseranspruch beeinflusst (hier nach ASTM C109; ASTM C1437).

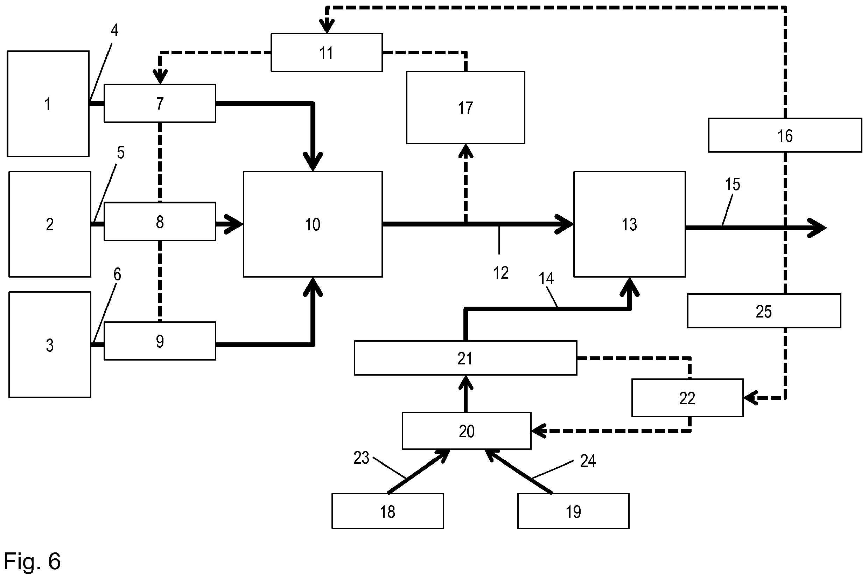

Fig. 6 zeigt ein Ausführungsbeispiel, dass die beiden Varianten gemäß Fig. 1 und 3 zusammenführt. Bei dieser Variante kann der Wasseranspruch und/oder die Verarbeitbarkeit des Zementklinkersubstituts 15 bzw. eines Bindemittels mit dem kalzinierten Ton 15 direkt durch das Mischungsverhältnis der Tonrohstoffe 4, 5, 6 und/oder durch Auswahl und/oder Aufbereitung des Brennstoffs 23, 24 eingestellt werden. Dabei ist es natürlich denkbar, dass anstelle der ersten Analyseeinrichtung 16 und der zweiten Analyseeinrichtung 25 lediglich eine gemeinsame Analyseeinrichtung vorgesehen ist, um den beispielsweise nach ASTM C1437 ermittelten Wasseranspruch zu ermitteln und bei einer Abweichung von den vorgegebenen Sollwerten einen entsprechenden Einfluss auf das Mischungsverhältnis der Tonrohstoffe 4, 5, 6 oder auf den Brennstoff 14 hinsichtlich seiner Zusammensetzung und/oder Korngröße zunehmen. Die Festlegung der Soll- bzw. Zielwerte kann zudem über eine empirische Auswertung historischer Daten erfolgen. Hier kommt beispielsweise eine einfache Wichtung der Tonrohstoffe nach der Bestimmung des Wasseranspruchs der Tonrohstoffe in Frage.

Weicht der beobachte Wert des Wasseranspruchs oder der Verarbeitbarkeit vom gewünschten Sollwert ab sind folgende Beeinflussungsmöglichkeiten denkbar:
- Veränderung des Mischungsverhältnisses der Tonrohstoffe 4, 5, 6
- Veränderung des Mischungsverhältnisses der Brennstoffe 23, 24
- Veränderung der Kornverteilung des Brennstoffs 14.

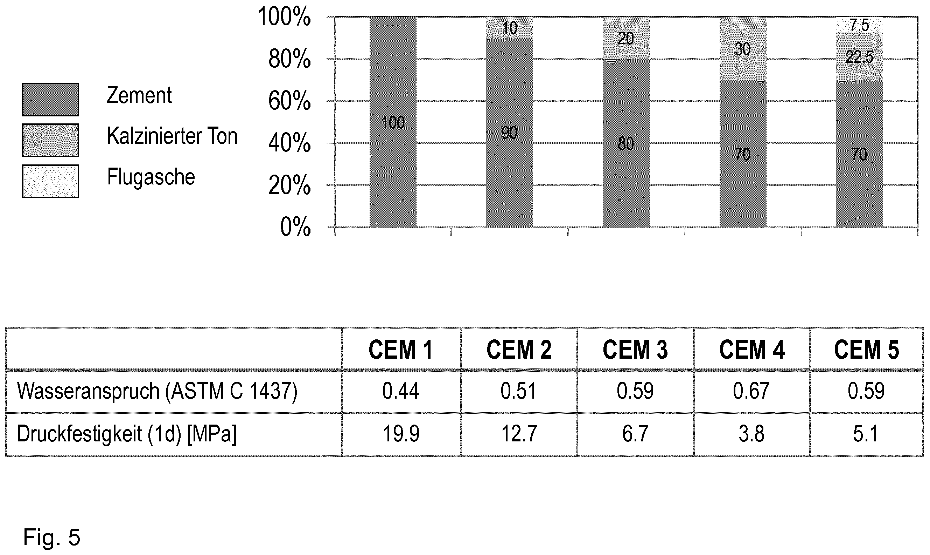

Fig. 5 verdeutlicht den Einfluss des Flugascheanteils auf den Wasseranspruch und die Festigkeitsentwicklung eines Bindemittels aus Zement, kalziniertem Ton und Flugasche. Verglichen mit einem Referenzzement (ohne kalziniertem Ton und Flugasche) steigt mit steigendem Gehalt an kalziniertem Ton der Wasseranspruch an. Ersetzt man, wie im Beispiel CEM 5, einen Teil des kalzinierten Tons durch Flugasche wird der Wasseranspruch um 12 % reduziert und die Eintagesfestigkeit um 34% verbessert.

## Patentansprüche

1. Verfahren zur Herstellung eines Zementklinkersubstituts (15), das vorrangig aus kalziniertem Ton (15) besteht,
**dadurch gekennzeichnet, dass**
wenigstens zwei unterschiedliche Tonrohstoffe (4, 5, 6) bereitgestellt werden, aus denen eine Tonmischung (12) hergestellt wird, die anschließend zu dem Zementklinkersubstitut (15) kalziniert wird.

2. Verfahren nach Anspruch 1, **dadurch gekennzeichnet, dass** für das Zementklinkersubstitut (15) oder einem Bindemittel mit dem Zementklinkersubstitut ein Sollwert für den Wasseranspruch und/oder die Verarbeitbarkeit vorgegeben wird, der durch das Mischungsverhältnis der wenigstens zwei unterschiedlichen Tonrohstoffe (4, 5, 6) in der Tonmischung eingestellt wird.

3. Verfahren nach Anspruch 2, **dadurch gekennzeichnet, dass** der Wasseranspruch und/oder die Verarbeitbarkeit des Zementklinkersubstituts (15) oder eines Bindemittels mit dem Zementklinkersubstitut gemessen werden und zur Einstellung des Mischungsverhältnisses der wenigstens zwei unterschiedlichen Tonrohstoffe (4, 5, 6) verwendet werden.

4. Verfahren nach Anspruch 2, **dadurch gekennzeichnet, dass** zur Erreichung des ersten Sollwerts für den Wasseranspruch und/oder des zweiten Sollwerts für die Verarbeitbarkeit neben der Einstellung des Mischungsverhältnisses der wenigstens zwei unterschiedlichen Tonrohstoffe (4, 5, 6) auch ein für die Kalzination der Tonmischung (12) zur Anwendung kommender Brennstoff (14) hinsichtlich seiner Brennstoffzusammensetzung und/oder seiner Kornverteilung angepasst wird.

5. Verfahren nach Anspruch 3, **dadurch gekennzeichnet, dass** der Wasseranspruch und/oder die Verarbeitbarkeit des Zementklinkersubstituts (15) oder eines Bindemittels mit dem Zementklinkersubstitut gemessen werden und zur Einstellung des Mischungsverhältnisses der wenigstens zwei unterschiedlichen Tonrohstoffe (4, 5, 6) und/oder zur Anpassung der Brennstoffzusammensetzung und/oder zur Anpassung der Kornverteilung des bei der Kalzination zur Anwendung kommenden Brennstoffs (14) verwendet werden.

6. Verfahren nach Anspruch 2, **dadurch gekennzeichnet, dass** der Wasseranspruch oder die Verarbeitbarkeit des Zementklinkersubstituts (15) oder eines Bindemittels mit dem Zementklinkersubstitut mit Hilfe einer rheologischen Analyse bestimmt wird.

7. Verfahren nach Anspruch 1, **dadurch gekennzeichnet, dass** die Tonmischung (12) vor der Kalzination zerkleinert und/oder homogenisiert wird.

8. Verfahren nach Anspruch 1, **dadurch gekennzeichnet, dass** die Tonmischung (12) vor der Kalzination hinsichtlich ihrer mineralogischen Zusammensetzung analysiert wird.

## Claims

1. Process for producing a cement clinker substitute (15) which consists predominantly of calcined clay (15),
**characterized in that**
at least two different clay raw materials (4, 5, 6) are provided and these are used to produce a clay mixture (12) which is subsequently calcined to give the cement clinker substitute (15).

2. Process according to Claim 1, **characterized in that** an intended value for the water requirement and/or the workability is prescribed for the cement clinker substitute (15) or a binder comprising the cement clinker substitute, and this value is set via the mixing ratio of the at least two different clay raw materials (4, 5, 6) in the clay mixture.

3. Process according to Claim 2, **characterized in that** the water requirement and/or the workability of the cement clinker substitute (15) or of a binder comprising the cement clinker substitute are measured and used to set the mixing ratio of the at least two different clay raw materials (4, 5, 6).

4. Process according to Claim 2, **characterized in that**, in order to achieve the first intended value for the water requirement and/or the second intended value for the workability, not only is the mixing ratio of the at least two different clay raw materials (4, 5, 6) set but a fuel (14) employed for calcining the clay mixture (12) is also adapted in respect of its fuel composition and/or its particle size distribution.

5. Process according to Claim 3, **characterized in that** the water requirement and/or the workability of the cement clinker substitute (15) or of a binder comprising the cement clinker substitute are measured and are used for setting the mixing ratio of the at least two different clay raw materials (4, 5, 6) and/or for adapting the fuel composition and/or for adapting the particle size distribution of the fuel (14) employed in the calcination.

6. Process according to Claim 2, **characterized in that** the water requirement or the workability of the cement clinker substitute (15) or of a binder comprising the cement clinker substitute is determined by means of rheological analysis.

7. Process according to Claim 1, **characterized in that** the clay mixture (12) is comminuted and/or homogenized before the calcination.

8. Process according to Claim 1, **characterized in that** the clay mixture (12) is analyzed to determine its mineralogical composition before the calcination.

## Revendications

1. Procédé pour la fabrication d'un substitut (15) de clinker de ciment, qui est constitué principalement d'argile calcinée (15),
**caractérisé en ce qu'**au moins deux matières premières (4, 5, 6) différentes de type argile sont mises à disposition, à partir desquelles un mélange (12) d'argiles est préparé, qui est ensuite calciné pour donner le substitut (15) de clinker de ciment.

2. Procédé selon la revendication 1, **caractérisé en ce que** pour le substitut (15) de clinker de ciment ou pour un liant comprenant le substitut de clinker de ciment, une valeur cible pour la demande en eau et/ou pour l'ouvrabilité est prédéterminée, qui est ajustée par le rapport de mélange desdites au moins deux matières premières (4, 5, 6) différentes de type argile dans le mélange d'argiles.

3. Procédé selon la revendication 2, **caractérisé en ce que** la demande en eau et/ou l'ouvrabilité du substitut (15) de clinker de ciment ou d'un liant comprenant le substitut de clinker de ciment, sont mesurées et sont utilisées pour l'ajustement du rapport de mélange desdites au moins deux matières premières (4, 5, 6) différentes de type argile.

4. Procédé selon la revendication 2, **caractérisé en ce que** pour obtenir la première valeur cible pour la demande en eau et/ou de la deuxième valeur cible pour l'ouvrabilité, parallèlement à l'ajustement du rapport de mélange desdites au moins deux matières premières (4, 5, 6) différentes de type argile, un combustible (14) applicable pour la calcination du mélange (12) d'argiles est également adapté en ce qui concerne sa composition du combustible et/ou de sa distribution granulométrique.

5. Procédé selon la revendication 3, **caractérisé en ce que** la demande en eau et/ou l'ouvrabilité du substitut (15) de clinker de ciment ou d'un liant comprenant le substitut de clinker de ciment, sont mesurées et sont utilisées pour l'ajustement du rapport de mélange desdites au moins deux matières premières (4, 5, 6) différentes de type argile et/ou pour l'adaptation de la composition du combustible et/ou pour l'adaptation de la distribution granulométrique du combustible (14) applicable à la calcination.

6. Procédé selon la revendication 2, **caractérisé en ce que** la demande en eau ou l'ouvrabilité du substitut (15) de clinker de ciment ou d'un liant comprenant le substitut de clinker de ciment est déterminé à l'aide d'une analyse rhéologique.

7. Procédé selon la revendication 1, **caractérisé en ce que** le mélange (12) d'argiles est, avant la calcination, broyé et/ou homogénéisé.

8. Procédé selon la revendication 1, **caractérisé en ce que** le mélange (12) d'argiles est analysé avant la calcination en ce qui concerne sa composition minéralogique.
